# FASCICULE DE BREVET EUROPEEN

(11) **EP 0 612 827 B1**
(45) Date de publication et mention de la délivrance du brevet: **25.11.1998**
(21) Numéro de dépôt: 94400358.1
(22) Date de dépôt: 18.02.1994
(51) Int. Cl.: C09K 19/54, G02F 1/1333

(54) **Procédé d'obtention de matériaux composites à base de polymère et de cristaux liquides avec colorants dichroiques**
Verfahren zur Herstellung von Verbundmaterialien auf Basis von Polymeren und Flüssigkristallen mit dichroitischen Farbstoffen
Process for manufacturing composite materials based on polymers and liquid crystals with dichroic dyes

(30) Priorité: 23.02.1993 FR 9302057
(43) Date de publication de la demande: 31.08.1994
(73) Titulaire: THOMSON-CSF, 75008 Paris (FR)
(72) Inventeur: Bouteiller, Laurent, F-92402 Courbevoie Cedex (FR); Le Barny, Pierre, F-92402 Courbevoie Cedex (FR); Vairon, Jean-Pierre, F-92402 Courbevoie Cedex (FR)
(74) Mandataire: Guérin, Michel

(56) Documents cités:
- EP-A- 0 512 397
- GB-A- 2 258 318

## Description

Le domaine de l'invention est celui des écrans de visualisation fonctionnant notamment en réflexion. Il s'agit plus précisément du domaine des écrans réalisés à partir des composites polymères-cristaux liquides contenant des colorants dichroïques.

Le fonctionnement de ce type d'écran est basé sur l'effet électrooptique suivant : un film de composite polymère-cristal liquide coloré est compris entre deux électrodes conductrices transparentes. Le cristal liquide coloré est obtenu par dilution de molécules colorantes entre des molécules de cristal liquide. Au repos, sans tension, le film est diffusant en raison des différences d'indice entre polymère et cristal liquide, et de plus absorbant en raison des molécules de colorant dont l'orientation imposée par celle du cristal liquide varie de manière aléatoire d'un domaine à l'autre. En appliquant une tension aux bornes de ce film, les molécules de cristal liquide s'orientent avec les molécules de colorant choisi dichroïque, parallèlement au champ électrique appliqué. En travaillant d'une part avec un cristal liquide dont l'indice ordinaire est égal à celui du polymère (il n'y a pas diffusion à l'interface polymère-cristal liquide) et d'autre part avec un colorant dichroïque qui n'absorbe plus, on obtient sous un champ électrique un film transparent. Un tel film est donc susceptible d'offrir deux états, un état diffusant et absorbant et un état transparent non absorbant. Le contraste obtenu avec de tels composites est beaucoup plus satisfaisant que celui proposé avec des composites ne renfermant pas de colorants dichroïques et qui ne présentent qu'un état diffusant et un état transparent.

De plus, l'utilisation de composites cristal liquide coloré polymère offre de nombreux avantages par rapport aux autres techniques de visualisation utilisant notamment des cellules à cristal liquide. En effet ces composites :
- bénéficient de la facilité de mise en oeuvre des polymères, ce qui permet de les déposer facilement en couche mince, d'épaisseur contrôlée sur des grandes surfaces ;
- ne nécessitent pas de traitement de surface des substrats formant l'écran ;
- fonctionnent sans polariseur (d'où un gain important de luminosité) ;
- présentent un effet électrooptique qui possède un angle de vue de l'ordre de 150°.

Néanmoins, à l'heure actuelle les techniques de mise en oeuvre de ces composés ne sont pas satisfaisantes et ce notamment en raison de la présence de colorants dichroïques.
* On peut employer une méthode par émulsion du cristal liquide coloré dans une phase aqueuse contenant le polymère hydrosoluble ou le latex. Cependant les composites ainsi obtenus nécessitent des tensions de commande trop élevées pour un contraste acceptable. Ceci est dû en partie aux différences de résistivités entre le cristal liquide et le polymère hydrosoluble sur lequel vient se porter un pourcentage important de la tension de commande au détriment du cristal liquide à orienter (Wiley R., WO 90/03593, 05.04.1990), (Drzaic, P.S. Displays, 12,2,1991), (Drzaic P.S. Gonzales A.M., Jones P., Montoya W., SID 92 Digest, 571).
* Parallèlement les méthodes de séparation de phases induites par polymérisation thermique sur un mélange monomère/cristal liquide/colorant présentent de mauvaises performances. Il ne peut s'agir que de polycondensation et non de polymérisation radicalaire en raison de la dégradation des colorants par les radicau libres. Cependant, dans les polymères obtenus par polycondensation une partie du colorant se trouve piégée dans les chaînes amorphes du polymère et non uniquement dans les parties poreuses du polymère. Ceci est dû à une ségrégation généralement insuffisante entre polymère et cristal liquide, le cristal liquide étant un bon solvant du colorant. Les polymères typiquement utilisés sont à base d'epoxy (West. J.L., Ondris R. Erdmann M., SPIE LCD and Applications, 76, 1990) et conduisent à des contrastes trop faibles.
* Les méthodes de séparation de phase induites par polymérisation photochimique (Ogawa T., Hotta S., EP 0434366 A2, 26.06.1991) sont inadaptées en raison de la faible stabilité aux UV de certaines molécules entrant dans la composition des colorants dichroïques noirs, qui se dégradent. De plus, la photopolymérisation se fait de manière très incomplète à cause de l'absorption des photons par les colorants.

Afin de pallier ces différents inconvénients, la présente invention propose d'élaborer dans un premier temps un film poreux de polymère réticulé puis d'introduire dans les pores un mélange contenant du cristal liquide et du colorant dichroïque. En procédant ainsi, le colorant dichroïque ne risque pas d'être altéré au cours de la polymérisation. Plus précisément, l'invention a pour objet un procédé d'obtention de matériau composite pour écran, comprenant un polymère (P), des molécules de cristal liquide (XL) et des molécules de colorants dichroïque (C) caractérisé en ce qu'il comporte les étapes suivantes :
- la réalisation d'un film poreux (F) de polymère réticulé, sur un substrat (S);
- la diffusion dans le film poreux (F) d'un mélange (M) contenant un solvant capable de gonfler le polymère, des molécules de cristal liquide (XL) et des molécules de colorant dichroïque ;
- l'évaporation du solvant, conduisant à l'obtention d'un film de polymère avec des inclusions comprenant un mélange de cristal liquide et de colorant dichroïque.

Le film poreux de polymère réticulé peut avantageusement être obtenu à partir d'un mélange (M)ₒ de monomère photopolymérisable, de photoamorceur et de cristal liquide (XL). Le monomère est de préférence polyfonctionnel de manière à former un réseau lors de la polymérisation.

Le mélange (M)ₒ peut être introduit par capillarité dans une cellule démontable comprenant un substrat (S) et un second substrat (S)ₒ de faible énergie de surface, séparé du substrat (S) par des cales d'épaisseur.

La photopolymérisation du mélange (M)ₒ peut être réalisée par irradiation d'ultraviolets au travers du substrat (S).

Le substrat (S)ₒ peut alors avantageusement être retiré pour laver le film de polymère réticulé et comprenant des inclusions de cristal liquide (XL)ₒ Cette étape est réalisée grâce à un solvant capable de gonfler le polymère permettant par la même l'exclusion du cristal liquide (XL)ₒ, laissant un film poreux de polymère réticulé.

Le film poreux de polymère réticulé peut également être obtenu à partir d'un mélange (M)'ₒ contenant un monomère et un liquide solvant du monomère, non solvant du polymère et de faible tension superficielle à la température ambiante. La polymérisation peut être initiée selon les méthodes classiques, de polymérisation.

On procède alors à la diffusion d'un mélange (M) contenant du cristal liquide (XL), du colorant (C) au sein du réseau de polymère et un solvant capable également de gonfler le polymère, ce solvant pouvant être identique à celui de l'étape précédente de lavement. Après évaporation de ce solvant, on obtient le film désiré de polymère possédant des inclusions de cristal liquide (XL) et de colorant (C).

Grâce au procédé de l'invention et au solvant utilisé on peut obtenir aussi bien des billes de cristal liquide coloré dispersées dans du polymère correspondant à de forts taux de polymère par rapport au cristal liquide, ou PDLC, que des réseaux moins riches en polymère et plus denses en cristal liquide ou PNLC. Ces deux types de composites présentent chacun des inconvénients et des avantages que l'on cherche généralement à maîtriser.

En effet, les PDLC présentent l'intérêt d'offrir une bonne tenue mécanique rendant inutile l'utilisation de joints de scellement mais offrant néanmoins des tensions de commande relativement élevées. Par contre les réseaux à fort taux de cristal liquide qui possèdent de très basses tensions peuvent avoir de moins bonnes performances mécaniques. C'est pourquoi il est très avantageux de disposer d'un procédé de mise en oeuvre applicable dans une large gamme de concentrations en cristal liquide pour optimiser le film composite polymère/cristal liquide.

L'invention sera mieux comprise et d'autres avantages apparaîtront à la lecture de la description qui va suivre et des figures annexées par lesquelles :
- la figure 1 illustre une cellule démontable contenant un mélange de monomère plus cristal liquide, soumis à une irradiation d'ultraviolets ;
- la figure 2 illustre l'évolution de la transmission d'un écran réalise selon le procédé de l'invention, en fonction de la tension appliquée sur l'écran.

Dans le procédé d'obtention de composites polymère-cristal liquide, selon l'invention on peut réaliser à partir d'un mélange (A) réticulable de monomères contenant quelques pourcents d'un photoamorceur et d'un mélange (B) de cristaux liquides, un mélange homogène (M)ₒ et ce en proportions quelconques de manière à définir ultérieurement un polymère de porosité variable.

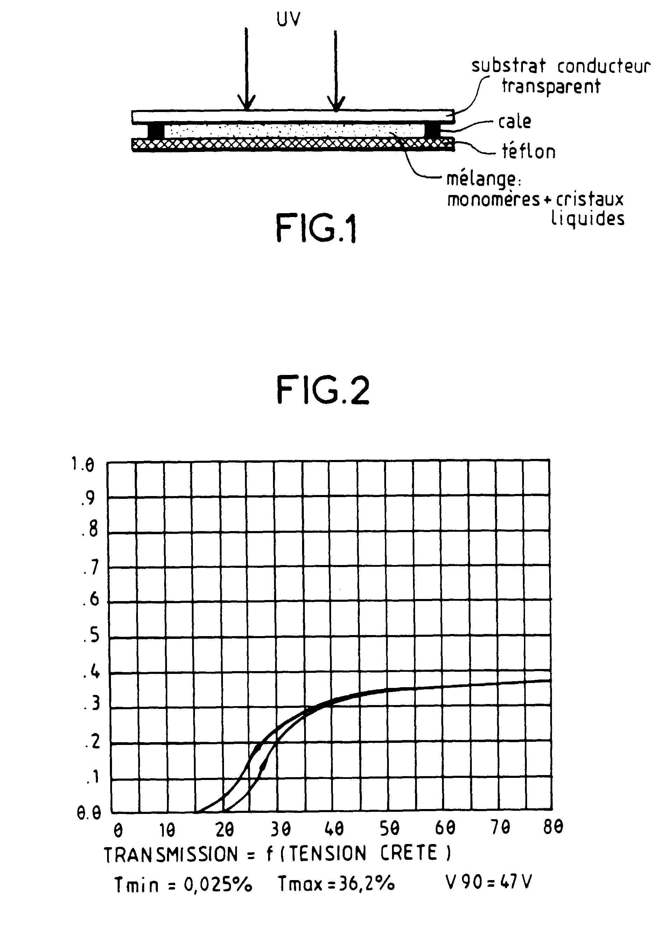

On peut avantageusement introduire ce mélange (M) par capillarité dans une cellule préalablement formée par un substrat (S) conducteur transparent (il peut s'agir d'une lame de matériau transparent recouvert d'une fine couche conductrice d'oxyde d'indium et d'étain), un substrat (S)ₒ de faible énergie de surface (il peut s'agir de Téflon) pouvant être facilement séparé d'un film de polymère, et de cales d'épaisseur connue et maîtrisée, l'ensemble substrats (S) et (S)ₒ et cales étant maintenu par des pinces. La cellule ainsi élaborée et remplie peut être irradiée par un rayonnement ultraviolet comme l'illustre la figure 1. On obtient alors un réseau réticulé de polymère contenant des inclusions de cristal liquide (XL)ₒ, le volume de ces inclusions étant gouverné par la teneur en mélange (B) dans le mélange (M)ₒ.

La cellule peut alors être ouverte, le substrat (S)ₒ adhérant peu sur le film préalablement formé. Ledit film peut ainsi être lavé avec un solvant (L)ₒ capable de gonfler le réseau polymère et permettre l'extraction des traces de monomères et d'amorceur ainsi que l'extraction du cristal liquide (XL)₀.

Un second mélange (M) comprenant un solvant (L) aussi capable de gonfler le polymère et pouvant être d'ailleurs le solvant (L)ₒ et un mélange de cristal liquide (XL) et de colorant (C) (le pourcentage de colorant (C) étant très faible devant celui de cristal liquide) est mis en contact du film poreux de polymère réticulé de manière à faire diffuser le cristal liquide (XL) et le colorant (C) au sein du réseau formé.

Typiquement, les solvants (L)ₒ et (L) peuvent être du dichlorométhane ou de l'héxane.

On laisse alors s'évaporer le solvant (L), puis l'on sèche sous vide le film poreux de polymère réticulé afin d'éliminer les dernières traces de solvant.

Pour réaliser le composite capable de passer d'un état diffusant à un étant transparent sous commande électrique, on dépose un deuxième substrat (S)' conducteur et transparent sur le film de polymère renfermant des inclusions de cristal liquide plus colorant.

L'écran ainsi réalisé possède un contraste très supérieur à l'écran identique ne contenant pas de colorant. L'optimisation de la teneur en polymère en colorant et de l'épaisseur du film permet d'obtenir à la fois un bon contraste et une faible tension de commande.

### Exemple de réalisation d'un écran réalisé à partir du procédé selon l'invention permettant d'obtenir un composite polymère-cristal liquide

On réalise un mélange de 17,3 % de monomère commercialisé par Merck BDH et référencé PN 350 (contenant 2,5 % de photoamorceur Darocure 1173) et de 82,7 % de cristal liquide commercialisé par Merck et référencé TL 202. On introduit le mélange par capillarité dans une cellule telle que décrite précédemment, d'épaisseur 23 µm. On irradie à une longueur d'onde voisine de 365 nm. On ouvre la cellule, et on lave le réseau formé dans le dichlorométhane. Le film ainsi obtenu est séché puis gonflé par un mélange de :
- 20 % de cristal liquide TL 202 contenant 1 % d'un mélange noir de colorants dichroïques commercialisé par Merck BDH et référencé F 593
- 80 % de dichlorométhane

On laisse le dichlorométhane s'évaporer pendant plusieurs heures. On préfère en effet une cinétique d'évaporation suffisamment lente de manière à introduire le maximum d'entités cristal liquide et colorant au sein des pores du réseau formé. On sèche alors le film sous vide pendant une heure. On applique enfin un deuxième substrat conducteur.

L'écran ainsi obtenu est caractérisé en mesurant la transmission en fonction de la tension de commande. Le rapport des transmissions Tmax/Tmin = 1450, Tmax correspondant à la transmission maximale que l'on peut atteindre sous tension et Tmin correspondant à la transmission de l'état diffusant au repos sans tension appliquée sur l'écran. La figure 2 illustre l'évolution de la transmission de l'écran en fonction de la tension appliquée sur l'écran réalisé selon l'invention. Il apparaît ainsi que la tension nécessaire pour obtenir 90 % de transmission est de l'ordre de 47 V.

## Revendications

1. Procédé d'obtention de matériau composite pour écran de visualisation, comprenant un polymère (P), des molécules de cristal liquide (XL) et des molécules de colorants dichroïque (C) caractérisé en ce qu'il comporte les étapes suivantes :
- la réalisation d'un film poreux (F) de polymère réticulé, sur un substrat (S) ;
- la diffusion dans le film poreux (F) d'un mélange (M) contenant un solvant capable de gonfler le polymère, des molécules de cristal liquide (XL) et des molécules de colorant dichroïque ;
- l'évaporation du solvant, conduisant à l'obtention d'un film de polymère avec des inclusions comprenant un mélange de cristal liquide et de colorant dichroïque.

2. Procédé d'obtention de matériau composite pour écran de visualisation selon la revendication 1, caractérisé en ce que le film poreux (F) de polymère réticulé est obtenu à partir d'un mélange (M)ₒ de monomère photopolymérisable, de photoarmorceur et de cristal liquide (XL)ₒ.

3. Procédé d'obtention de matériau composite pour écran de visualisation selon la revendication 2, caractérisé en ce que le monomère photopolymérisable est polyfonctionnel pour former lors de la polymérisation un réseau de polymère réticulé.

4. Procédé d'obtention de matériau composite pour écran de visualisation selon l'une des revendications 2 ou 3, caractérisé en ce que le mélange (M)ₒ est introduit par capillarité dans une cellule démontable comprenant un substrat (S) et un second substrat (S)ₒ de faible énergie de surface séparé du substrat (S) par des cales d'épaisseur.

5. Procédé d'obtention de matériau composite pour écran de visualisation selon la revendication 4, caractérisé en ce que la polymérisation est réalisée par irradiation au travers du substrat (S).

6. Procédé d'obtention de matériau composite pour écran de visualisation selon la revendication 5, caractérisé en ce qu'après la polymérisation, le substrat (S)ₒ est retiré et le film poreux de polymère réticulé contenant des inclusions de cristal liquide (XL)ₒ est lavé avec un solvant (L)ₒ de manière à éliminer les traces de monomère et d'amorceur ainsi que le cristal liquide (XL)ₒ.

7. Procédé d'obtention de matériau composite pour écran de visualisation selon la revendication 6, caractérisé en ce que le mélange (M) est introduit dans le film poreux de polymère.

8. Procédé d'obtention de matériau composite pour écran de visualisation selon l'une des revendications 1 à 7, caractérisé en ce que le solvant (L)ₒ est identique au solvant (L).

9. Procédé d'obtention de matériau composite pour écran de visualisation selon l'une des revendications 1 à 8, caractérisé en ce que le cristal liquide (XL)ₒ servant à créer la porosité du film de polymère est le même que le cristal liquide (XL) du composite final.

10. Procédé d'obtention de matériau composite pour écran de visualisation selon l'une des revendications 8 et 9, caractérisé en ce que le monomère photopolymérisable est de type acrylique.

11. Procédé d'obtention de matériau composite pour écran de visualisation selon la revendication 10, caractérisé en ce que le solvant (L) est du dichlorométhane.

12. Procédé d'obtention de matériau composite pour écran de visualisation selon la revendication 10, caractérisé en ce que le solvant (L) est de l'hexane.

13. Procédé d'obtention de matériau composite pour écran de visualisation selon la revendication 1, caractérisé en ce que le film poreux (F) de polymère réticulé est obtenu à partir d'un mélange (M)'ₒ de monomère, de liquide solvant du monomère et non solvant du polymère formé à partir du monomère, ledit liquide ayant une faible tension superficielle à la température ambiante.

14. Procédé d'obtention de matériau composite pour écran de visualisation selon l'une des revendications 1 à 13, caractérisé en ce que l'étape d'évaporation du solvant (L) est suivie d'une seconde étape de séchage sous vide pour éliminer les traces restantes de solvant (L).

## Patentansprüche

1. Verfahren zur Bildung eines Verbundmaterials für einen Bildschirm mit einem Polymer (P), mit Flüssigkristallmolekülen (XL) und mit dichroitischen Farbstoffmolekülen (C), gekennzeichnet durch die folgenden Verfahrensschritte:
- Herstellung einer porösen Schicht (F) aus vernetztem Polymer auf einem Substrat (S),
- Diffusion einer Mischung (M), die ein das Polymer aufblähendes Lösungsmittel, Flüssigkristallmoleküle (XL) und dichroitische Farbstoffmoleküle enthält, in die poröse Schicht (F),
- Verdampfung des Lösungsmittels, sodaß sich eine Polymerschicht mit Einschlüssen ergibt, die eine Mischung von Flüssigkristallen und dichroitischen Farbstoffen enthalten.

2. Verfahren zur Bildung eines Verbundmaterials für einen Bildschirm nach Anspruch 1, dadurch gekennzeichnet, daß die poröse Schicht (F) aus vernetztem Polymermaterial sich aus einer Mischung (M)ₒ eines photopolymerisierbaren Monomers, eines Photoauslösers und eines Flüssigkristalls (XL)ₒ ergibt.

3. Verfahren zur Bildung eines Verbundmaterials für einen Bildschirm nach Anspruch 2, dadurch gekennzeichnet, daß das photopolymerisierbare Monomer polyfunktional ist und bei der Polymerisierung ein Netz von vernetztem Polymermaterial ergibt.

4. Verfahren zur Bildung eines Verbundmaterials für einen Bildschirm nach einem der Ansprüche 2 oder 3, dadurch gekennzeichnet, daß die Mischung (M)ₒ durch Kapillarwirkung in eine zerlegbare Zelle eingebracht wird, die ein Substrat (S) und ein zweites Substrat (S)ₒ aufweist, das eine geringe Oberflächenenergie besitzt und von dem Substrat (S) durch Abstandshalter getrennt ist.

5. Verfahren zur Bildung eines Verbundmaterials für einen Bildschirm nach Anspruch 4, dadurch gekennzeichnet, daß die Polymerisierung mittels Bestrahlung durch das Substrat (S) hindurch erfolgt.

6. Verfahren zur Bildung eines Verbundmaterials für einen Bildschirm nach Anspruch 5, dadurch gekennzeichnet, daß nach der Polymerisierung das zweite Substrat (S)ₒ abgezogen wird und die poröse Schicht aus vernetztem Polymer mit eingeschlossenen Flüssigkristallen (XL)ₒ mittels eines Lösungsmittels (L)ₒ gewaschen wird, sodaß die Spuren von Monomer und Photoauslöser sowie der Flüssigkristall (XL)ₒ eliminiert werden.

7. Verfahren zur Bildung eines Verbundmaterials für einen Bildschirm nach Anspruch 6, dadurch gekennzeichnet, daß die Mischung (M) in die poröse Polymerschicht eingebracht wird.

8. Verfahren zur Bildung eines Verbundmaterials für einen Bildschirm nach einem der Ansprüche 1 bis 7, dadurch gekennzeichnet, daß die beiden Lösungsmittel (L)ₒ und (L) identisch sind.

9. Verfahren zur Bildung eines Verbundmaterials für einen Bildschirm nach einem der Ansprüche 1 bis 8, dadurch gekennzeichnet, daß der Flüssigkristall (XL)ₒ, der zur Porenbildung der Polymerschicht verwendet wird, der gleiche ist wie der Flüssigkristall (XL) des endgültigen Verbundmaterials.

10. Verfahren zur Bildung eines Verbundmaterials für einen Bildschirm nach einem der Ansprüche 8 und 9, dadurch gekennzeichnet, daß das photopolymerisierbare Monomer vom Acryltyp ist.

11. Verfahren zur Bildung eines Verbundmaterials für einen Bildschirm nach Anspruch 10, dadurch gekennzeichnet, daß das Lösungsmittel (L) Dichlormethan ist.

12. Verfahren zur Bildung eines Verbundmaterials für einen Bildschirm nach Anspruch 10, dadurch gekennzeichnet, daß das Lösungsmittel (L) Hexan ist.

13. Verfahren zur Bildung eines Verbundmaterials für einen Bildschirm nach Anspruch 1, dadurch gekennzeichnet, daß die poröse Schicht (F) aus vernetztem Polymermaterial ausgehend von einer Mischung (M)'ₒ eines Monomers und einer das Monomer lösenden, aber das aus dem Monomer gebildete Polymer nicht lösenden Flüssigkeit erhalten wird, die eine geringe Oberflächenspannung bei Umgebungstemperatur besitzt.

14. Verfahren zur Bildung eines Verbundmaterials für einen Bildschirm nach einem der Ansprüche 1 bis 13, dadurch gekennzeichnet, daß der Verfahrensschritt der Verdampfung des Lösungsmittels (L) von einem zweiten Verfahrensschritt der Trocknung im Vakuum gefolgt wird, um die verbleibenden Spuren des Lösungsmittels (L) zu entfernen.

## Claims

1. Method of obtaining a composite material for a display screen, comprising a polymer (P), liquid crystal molecules (XL) and dichroic dye molecules (C), characterized in that it includes the following steps:
- producing a porous film (F) of cross-linked polymer on a substrate (S);
- diffusing a mixture (M) of liquid crystal molecules (XL) and dichroic dye molecules into the porous film (F), this mixture (M) containing a solvent capable of swelling the polymer;
- evaporating the solvent, leading to a polymer film being obtained with inclusions comprising a mixture of liquid crystal and dichroic dye.

2. Method of obtaining a composite material for a display screen according to Claim 1, characterized in that the porous film (F) of cross-linked polymer is obtained from a mixture (M)ₒ of photopolymerizable monomer, photoinitiator and liquid crystal (XL)ₒ.

3. Method of obtaining composite material for a display screen according to Claim 2, characterized in that the photopolymerizable monomer is polyfunctional so that it forms a cross-linked polymer network on polymerization.

4. Method of obtaining a composite material for a display screen according to one of Claims 2 and 3, characterized in that the mixture (M)ₒ is introduced by capillary action into a disassemblable cell comprising a substrate (S) and a second substrate (S)ₒ with low surface energy, separated from the substrate (S) by spacers.

5. Method of obtaining a composite material for a display screen according to Claim 4, characterized in that the polymerization is carried out by irradiation through the substrate (S).

6. Method of obtaining a composite material for a display screen according to Claim 5, characterized in that, after polymerization, the substrate (S)ₒ is removed and the porous film of cross-linked polymer containing liquid crystal inclusions (XL)ₒ is washed with a solvent (L)ₒ so as to eliminate the traces of monomer and initiator as well as the liquid crystal (XL)ₒ.

7. Method of obtaining a composite material for a display screen according to Claim 6, characterized in that the mixture (M) is introduced into the porous polymer film.

8. Method of obtaining a composite material for a display screen according to one of Claims 1 to 7, characterized in that the solvent (L)ₒ is identical to the solvent (L).

9. Method of obtaining a composite material for a display screen according to one of Claims 1 to 8, characterized in that the liquid crystal (XL)ₒ used to create the porosity in the polymer film is the same as the liquid crystal (XL) in the final composite.

10. Method of obtaining a composite material for a display screen according to one of Claims 8 and 9, characterized in that the photopolymerizable monomer is of the acrylic type.

11. Method of obtaining a composite material for a display screen according to Claim 10, characterized in that the solvent (L) is dichloromethane.

12. Method of obtaining a composite material for a display screen according to Claim 10, characterized in that the solvent (L) is hexane.

13. Method of obtaining a composite material for a display screen according to Claim 1, characterized in that the porous film (F) of cross-linked polymer is obtained from a mixture (M)'ₒ of monomer and of a liquid which dissolves the monomer that does not dissolve the polymer formed from the monomer, the said liquid having a low surface tension at room temperature.

14. Method of obtaining a composite material for a display screen according to one of Claims 1 to 13, characterized in that the step of evaporating the solvent (S) is followed by a second step of vacuum drying in order to eliminate the remaining traces of solvent (L).
